# EUROPEAN PATENT APPLICATION

(11) **EP 4 191 459 A1**
(43) Date of publication of application: **07.06.2023**
(21) Application number: 21306697.0
(22) Date of filing: 02.12.2021
(51) Int. Cl.: G06F 30/10, G06F 111/10

(54) **PARTITIONING 3D CAD MODEL**

(71) Applicant: Dassault Systèmes, 78140 Vélizy-Villacoublay (FR)
(72) Inventor: Marini, Laurent, 78946 Vélizy-Villacoublay (FR); Bouvier, Vincent, 78946 Vélizy-Villacoublay (FR)
(74) Representative: Bandpay & Greuter

(57) **Abstract**

The disclosure notably relates to a computer-implemented method for partitioning a computer-aided design 3D model of a mechanical part. The method comprising providing a volumetric B-Rep of the CAD 3D model (S10), detecting one or more ribbons of the volumetric B-Rep (S20), ranking the one or more detected ribbons based on one or more geometrical criteria that are associated with each of the one or more detected ribbons (S30), and selecting successively following the ranking each of the ranked one or more detected ribbons (S40). The method further comprises, for each selected ribbons partitioning the volumetric B-Rep of CAD 3D model using a splitting method associated with the geometrical criteria of the selected ribbon, thereby obtaining two or more partitions (S50); and for each obtained partition, determining whether the partition represents a sweepable volume (S60).

## Description

### TECHNICAL FIELD

The disclosure relates to the field of computer programs and systems, and more specifically to a method, system, and program for processing a computer-aided design (CAD) 3D model of a mechanical part.

### BACKGROUND

A number of systems and programs are offered on the market for the design, the engineering, and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production, and service.

Hexahedral meshing generates meshes composed of deformed cubes (hexahedra). Hexahedral meshes are often used for simulating some physics (deformation mechanics, fluid dynamics, ...) because they significantly improve both speed and accuracy in the context of systems and programs for the design and engineering based on such simulations. Advantages of using hexahedral meshes for the purpose of simulating some physics are for instance discussed in "Hexahedral Meshing: Mind the Gap!", Ray et al., hal-01551603, 2017.

However, in the known prior art, to obtain hexahedral meshes designers manually partition their 3D volumetric part. The manual partitioning aims at decomposing the 3D volumetric part into a set of swept volumes (also referred to as sweepable regions). This sweepability of each region is then used by a meshing tool to create a 3D hexahedral mesh for each region. The manual partitioning is not only a cumbersome task, but also depends on designers' expertise, e.g., the designer's analysis; thus the result of a manual partitioning is uncertain.

Within this context, there is still a need for an improved method for partitioning a computer-aided design 3D model of a part, e.g. a mechanical part.

### SUMMARY

It is therefore provided a computer-implemented method for partitioning a computer-aided design (CAD) 3D model of a mechanical part, the method comprising providing a volumetric B-Rep of the CAD 3D model; detecting one or more ribbons of the volumetric B-Rep, each ribbon comprising one or more connected faces of the volumetric B-Rep and being, when unfolded, homeomorphic with a rectangle; ranking the one or more detected ribbons based on one or more geometrical criteria that are associated with each of the one or more detected ribbons; and selecting successively each of the ranked one or more detected ribbons, the selection being made following the ranking. The method further comprises, for each selected ribbons, partitioning the volumetric B-Rep of CAD 3D model using a splitting method associated with the geometrical criteria of the selected ribbon, thereby obtaining two or more partitions; and for each obtained partition, determining whether or not the partition represents a sweepable volume.

The method may comprise one or more of the following:
- the one or more geometrical criteria associated with each of the one or more detected ribbons are selected among: the detected ribbon is a depression, the detected ribbon is a protrusion, the detected ribbon is closed, and/or the detected ribbon has a revolution;
- the ranking the one or more detected ribbons based on one more geometrical criteria comprises ranking the detected ribbons in the following ranking order: the detected ribbon is closed and is a protrusion, the detected ribbon is closed and is depression, the detected ribbon is a protrusion, the detected ribbon is a depression, and the detected ribbon is a revolution;
- for each detected ribbon ranked according to a) or c) the partitioning the volumetric B-Rep of CAD 3D model using a splitting method comprises: isolating the protrusion from the rest of the volumetric B-Rep by: selecting a concave neighbor of the ribbon, and extrapolating the concave neighbor up through the volumetric B-Rep;
- for each detected ribbon ranked according to b) the partitioning the volumetric B-Rep of CAD 3D model using a splitting method comprises: determining whether the detected ribbon has a large impact, the detected ribbon having a large impact if the detected ribbon has a size smaller than a distance between the ribbon and an intersection between the volumetric B-Rep and an extrapolation of the detected ribbon, and creating a splitting surface which is the offset of the convex neighbor of the ribbon if the detected ribbon has a large impact;
- for each detected ribbon ranked according to d) the partitioning the volumetric B-Rep of CAD 3D model using a splitting method comprises: creating a splitting surface by extrapolating the ribbon up through the volumetric B-Rep;
- for each detected ribbon ranked according to e) the partitioning the volumetric B-Rep of CAD 3D model using a splitting method comprises: splitting a volume enclosed by the ribbon into three volumes one of which is a cylinder;
- the detecting one or more ribbons of the volumetric B-Rep further comprises: detecting one or more smooth surfaces, each detected smooth surface comprising a group of connected faces of the volumetric B-Rep, each pair of connected faces in the group having a smooth junction, selecting one or more square smooth surfaces among the detected one or more smooth surfaces, each square smooth surface being, when unfolded, homeomorphic with a rectangle, and detecting ribbons by selecting a set of one or more connected surfaces of the one or more detected square smooth surfaces, each detected ribbon having a width of one of the one or more selected connected surfaces;
- for each of the one or more detected smooth surfaces, an angle between each two connected faces is larger than or equal to 150 degrees and smaller than or equal to 210 degrees;
- the partitioning the volumetric B-Rep of CAD 3D model using a splitting method further comprises, for each obtained partition, computing one or more traces, a trace being a set of one or more edges residing on a face of the obtained partition, each of the one or more edges created as results of partitioning;
- the determining whether or not the partition represents a sweepable volume comprises, for each obtained partition: determining a start surface and a target surface, each of the start surface and the target surface being neighbor to the ranked ribbon, determining a sweep path on the ranked ribbon, determining that there exists a sweep from the start surface to the target surface along the sweep path, thereby determining the partition represents a sweepable volume; and/or
- the method further comprises, for each selected ribbons and after the obtaining two or more partitions, verifying that an angle between each two edges created as results of the partitioning is larger than or equal a quality angle.

It is further provided a computer program comprising instructions for performing the method.

It is further provided a computer readable storage medium having recorded thereon the computer program.

It is further provided a system comprising a processor coupled to a memory, the memory having recorded thereon the computer program.

### BRIEF DESCRIPTION OF THE DRAWINGS

Non-limiting examples will now be described in reference to the accompanying drawings, where:
- FIG. 1 shows a flowchart of an example of the method;
- FIGs. 2A-B, show examples of sweepable volumes;
- FIGs. 3 and 4 show examples of CAD models of mechanical parts comprising sweepable volumes:
- FIG. 5 shows a flowchart of an example of the method;
- FIGs. 6 and 7 show examples of smooth surfaces, square smooth surfaces, and ribbons;
- FIG. 8 shows examples of detected ribbons;
- FIG. 9 show examples of configuration files;
- FIGs. 10 to 13 show examples of splitting methods;
- FIG. 14 shows examples of traces;
- FIG. 15 to 19 show B-rep concepts involved in the method;
- FIG. 20 shows an example of a graphical user interface of the system; and
- FIG. 21 shows an example of the system.

### DETAILED DESCRIPTION

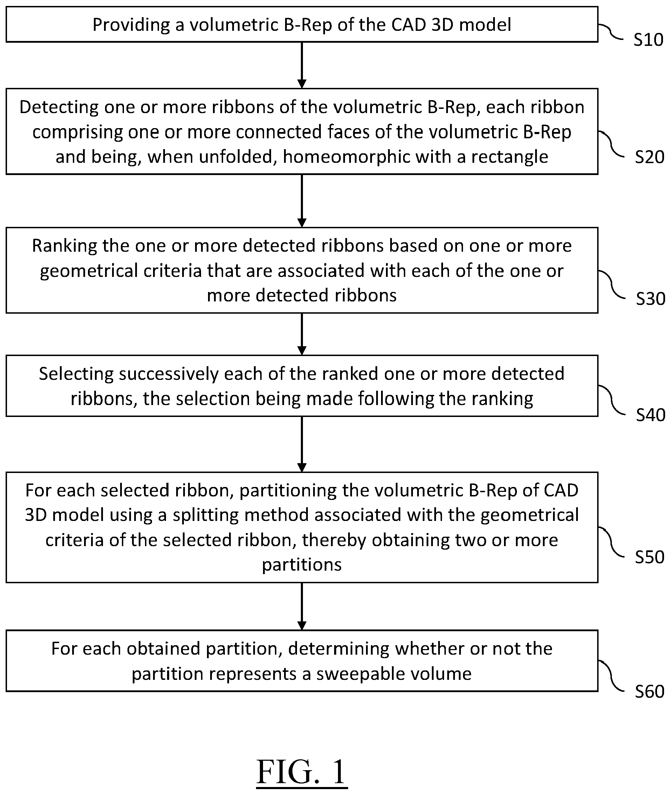

With reference to the flowchart of FIG. 1, it is proposed a computer-implemented method for partitioning a computer-aided design (CAD) 3D model of a mechanical part. The method comprises providing a volumetric B-Rep of the CAD 3D model. The method further comprises detecting one or more ribbons of the volumetric B-Rep. Each ribbon comprises one or more connected faces of the volumetric B-Rep and is, when unfolded, homeomorphic with a rectangle. The method further comprises ranking the one or more detected ribbons based on one or more geometrical criteria that are associated with each of the one or more detected ribbons, and selecting successively each of the ranked one or more detected ribbons. The selection is made following the ranking. The method further comprises, for each selected ribbons, partitioning the volumetric B-Rep of CAD 3D model using a splitting method associated with the geometrical criteria of the selected ribbon, thereby obtaining two or more partitions. The method further comprises, for each obtained partition, determining whether or not the partition represents a sweepable volume.

This constitutes an improved solution for processing a CAD 3D model of a mechanical part, for example in order to automatically partition the CAD model and/or to tessellate (i.e., triangulate) the CAD model based on such an obtained partitioning. Automatic partitioning is an advantageous solution in technical applications in comparison to manual partitioning as the automatic partitioning is reproductible and less time-consuming, and provides more relevant partitions in particular on complex mechanical parts. Indeed the method provides (an automatic) partitioning for a provided volumetric B-Rep representation of the CAD 3D model by detecting one or more ribbons and ranking them. By "partitioning" it is meant splitting the provided volumetric B-Rep into two or more sub-volumes.

The method partitions the volumetric B-Rep using a splitting method associated with geometrical criteria of a selected ribbon according to the ranking. Such a splitting method may be carried out according to any known method. Examples of splitting methods are discussed later on. Thus, the method enables to employ already existing solutions in the literature to split (i.e., partition) a CAD 3D model for a particularly ranked ribbon of the B-Rep of the CAD 3D model.

Notably, the method improves partitioning of a CAD model by partitioning a volumetric B-Rep of the CAD model. A B-Rep representation provides a relatively high compacity of information while also providing a relatively high level of details. Also, the B-Rep format provides most relevant information, namely the boundary of a solid, as compared to other types of representation such as unstructured representations. B-Rep is standardized in industrial design software solutions.

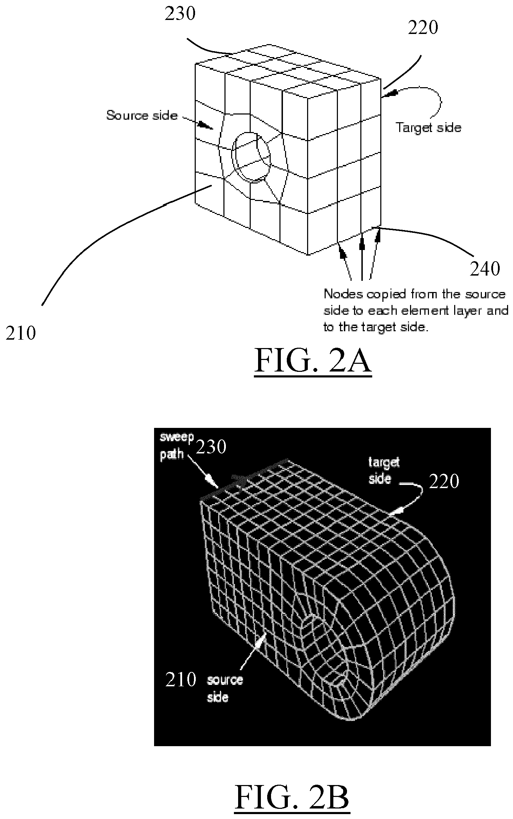

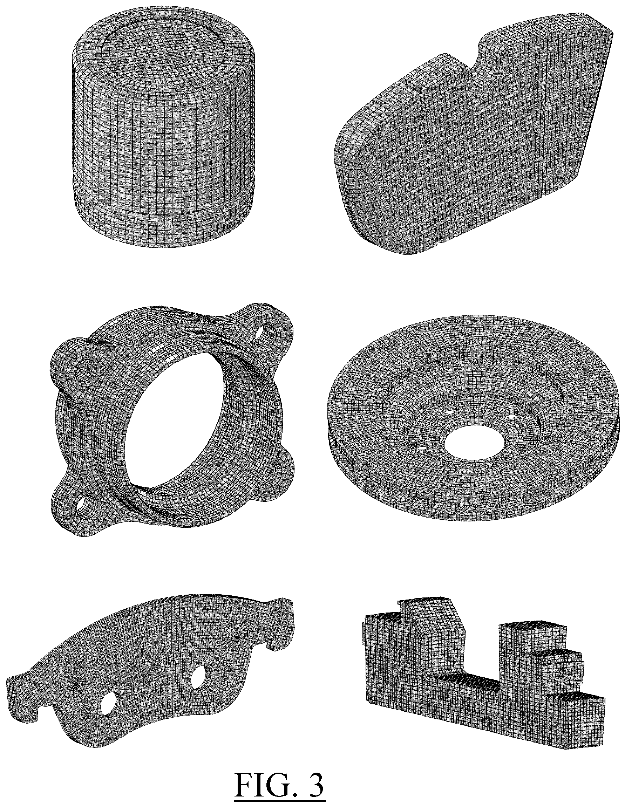

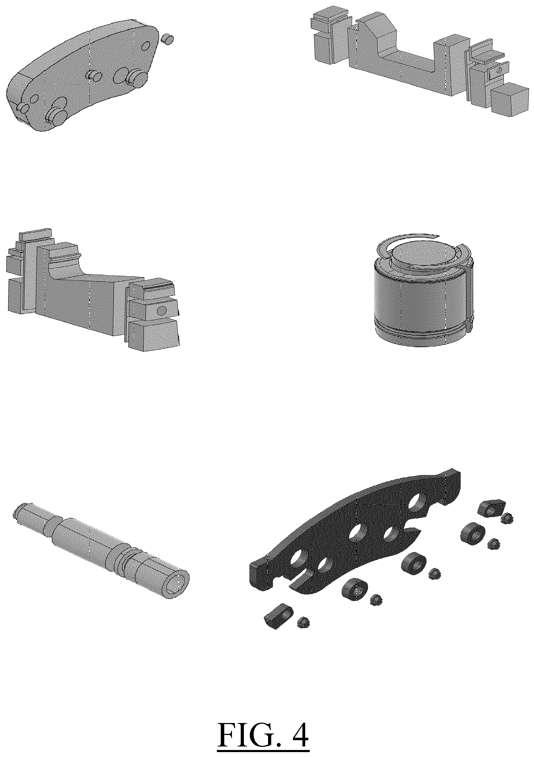

In examples, partitioning of a CAD model of a mechanical may be performed in processing a 3D CAD model before tessellating (i.e., triangulating) the model based on one or more tessellation criteria, for example a mesh type (e.g., hexagonal). In such examples, the method may guarantee such tessellation criteria and verify whether each of the obtained partitions represents a sweepable volume. By "a sweepable volume" it is meant that the volume may be represented as a sweep, i.e., by moving a face along a path. Such a volume contains a set of faces called source side, a set of faces called target side and between these two sets there is another set of faces which represents a sweep path. An example of such a region is presented in FIGs. 2A and 2B which represent the source side 210, the target side 220, and the sweep path 230. FIG. 2A further displays nodes 240 which are copied from the source side 210 to each element layer along the sweep path 230 and to the target side 220. Such volumes are useful in CAD models of mechanical parts. Examples of 3D CAD models of mechanical parts composed of sweepable volumes are presented in FIGs. 3 and 4. Obtaining a sweepable volume is advantageous as known in the field of 3D design by enabling the application of the sweep mesh method to each of the obtained partitions.

Partitioning a CAD 3D model into sweepable volumes is particularly relevant in the field of physical simulation and manufacturing CAD based on such physical simulations, that is, for software solutions to assist design processes and manufacturing processes, whereby the objective is to produce a physical product corresponding to a designed CAD 3D model. Within this context, the CAD 3D model represents a manufacturing product, that may be manufactured downstream to its design. The method may thus be part of such a simulation, design and/or manufacturing process. The method may for example form or be part of a step of testing a CAD model design within such design and/or manufacturing process, the step of testing a CAD model design including preparing the CAD model for a (physics-based) simulation (e.g., by tessellation of the CAD model or each of the obtained partition) and verifying whether or not the mechanical part represented by the CAD model satisfies one or more physical criteria based on the results of such a simulation (e.g., having a yield stress above a given threshold). For example, the method may partition a CAD 3D model into two or more smaller and/or less complex partitions thereby facilitating the tessellation of the CAD model and/or improving the quality of the mesh obtained from the tessellation process. Such an improvement of the quality of the mesh constitutes a two-fold improved solution, first by improving the quality of physical simulation and verification of physical criteria of corresponding mechanical part, and second by improving the time efficiency of obtaining such simulation results. As known in the field of physical simulations, improving the tessellation quality improves the computational efficiency and thereby improves the consumed time of computations to achieve a given accuracy in results of simulation based on the tessellation. In particular, the sweepable volumes which are the results of the partitioning method are ideal candidates for hexahedral meshing, i.e., for being tessellated into hexahedral meshes composed of deformed cubes. Such meshes significantly improve speed of the simulation as hexahedral meshes contain a smaller number of elements compared to tetrahedral meshes for a given accuracy. In addition, a physical simulation on hexahedral meshes is more realistic as they better capture higher order variations, avoid the locking phenomena encountered with tetrahedra, and hexahedral layers of the hexahedral elements may be aligned along geometric boundary features and/or some physical characteristics (flow direction, shock wave, heat gradient, etc.) which further improves the accuracy. Thus the manufacturing CAD process converges more quickly during the design phase towards the ideal mechanical part i.e., needs fewer real or virtual prototypes and trail-and-error.

Alternatively or additionally, the method may for example form or be part of a step of CAD feature obtention within such design and/or manufacturing process, the step of CAD feature obtention including partitioning the CAD model in order to obtain two or more smaller and/or less complex partitions and then perform a step of CAD feature obtention on each of the obtained partitions. The step of CAD feature obtention may include detection of geometries and parameterization of the detected geometries with respective CAD features. For example, the step of CAD feature obtention may be a step of feature-tree construction. Within this step, the method detects extrusion surfaces, e.g., while other methods may detect other geometries. The method may then further comprise parameterizing the detected extrusion surface(s). Indeed, detecting a respective extrusion surface as does the method allows parametrization of the respective skin portion of the CAD 3D model representing said extrusion surface. The parameterization facilitates the manipulation/edition of the CAD model.

Any of the step of testing a CAD model design and the step of CAD feature obtention which includes the method may be followed by further design and/or manufacturing steps which for example use tessellation and/or parameterized and detected geometries/CAD features by the method. These further steps may include further design and/or editions actions, tests, simulations and/or manufacturing. The method may in other words be included in a manufacturing CAD process, at a step where the CAD model is adapted for use in subsequent steps of the manufacturing CAD process (e.g., further design/edit actions, tests, simulations and/or manufacturing). The method may be included in many other applications which use the obtained partitions by the method.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined. For instance, the step of providing a volumetric B-Rep of the CAD 3D model of a mechanical part may be triggered upon an action of the user. For example, the action may comprise importing, loading, or creating the CAD 3D model by the user.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

The method generally manipulates modeled objects, such as the CAD 3D model. A modeled object is any object defined by data stored e.g., in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD and PLM system, as will be apparent from the definitions of such systems provided below.

By CAD system, it is additionally meant any system adapted at least for designing a modeled object on the basis of a graphical representation of the modeled object, such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g., non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 3D modeled object or 3D (CAD) model, e.g., representing a product such as a part or an assembly of parts, or possibly an assembly of products. By "3D modeled object" or "3D model", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e., increases the speed at which designers statistically accomplish their task). This speeds up the manufacturing process in the industry, as the design of the products is part of the manufacturing process.

The 3D modeled object or 3D model may represent the geometry of a product to be manufactured in the real world subsequent to the completion of its virtual design with for instance a CAD software solution or CAD system, such as a (e.g., mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD software solution allows the design of products in various and unlimited industrial fields, including: aerospace, architecture, construction, consumer goods, high-tech devices, industrial equipment, transportation, marine, and/or offshore oil/gas production or transportation. The 3D modeled object may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

A CAD system may be history-based. In this case, a modeled object is further defined by data comprising a history of geometrical features. A modeled object may indeed be designed by a physical person (i.e., the designer/user) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of design features is typically saved through an acyclic data flow linking the said geometrical features together through input and output links. The history based modeling paradigm is well known since the beginning of the 80's. A modeled object is described by two persistent data representations: history and B-rep (i.e., boundary representation). The B-rep is the result of the computations defined in the history. The shape of the part displayed on the screen of the computer when the modeled object is represented is (e.g., a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values. For example, a PLM system may manage fabrication tolerances, for example, in machining or molding regarding a provided extrusion feature in a CAD model.

By CAM solution, it is additionally meant any solution, software of hardware, adapted for managing the manufacturing data of a product. The manufacturing data generally includes data related to the product to manufacture, the manufacturing process and the required resources. A CAM solution is used to plan and optimize the whole manufacturing process of a product. For instance, it can provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademark DELMIA^{®}.

By CAE solution, it is additionally meant any solution, software of hardware, adapted for the analysis of the physical behavior of a modeled object. A well-known and widely used CAE technique is the Finite Element Method (FEM) which typically involves a division of a modeled object into elements which physical behaviors can be computed and simulated through equations. Such CAE solutions are provided by Dassault Systèmes under the trademark SIMULIA^{®}. Another growing CAE technique involves the modeling and analysis of complex systems composed a plurality of components from different fields of physics without CAD geometry data. CAE solutions allow the simulation and thus the optimization, the improvement, and the validation of products to manufacture. Such CAE solutions are provided by Dassault Systèmes under the trademark DYMOLA^{®}.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, salespeople, and buyers. A PDM solution is generally based on a product-oriented database. It allows the actors to share consistent data on their products and therefore prevents actors from using divergent data. Such PDM solutions are provided by Dassault Systèmes under the trademark ENOVIA^{®}.

As discussed above, the method for partitioning a CAD 3D model of a mechanical part comprises providing (S10) a volumetric B-Rep of the CAD 3D model. A volumetric B-Rep model includes topological entities and geometrical entities. The topological entities are face, edge, and vertex, and the geometrical entities are 3D objects, i.e., surface, plane, curve, line, and point. By definition, a face is a bounded portion of a surface, named the supporting surface. An edge is a bounded portion of a curve, named the supporting curve. Further by definition, a vertex is a point in 3D space. The bounded portion of a curve is defined by two points (i.e., vertices) lying on said curve. The bounded portion of a surface is defined by boundary of said portion. Said boundary is a set of edges lying on the surface. Edges of the face's boundary are connected together by sharing vertices. Faces are connected together by sharing edges. By definition, two faces are adjacent if they share an edge. Similarly, two edges are adjacent if they share a vertex. A volumetric B-Rep model of a CAD 3D model comprises, in an appropriate data structure, "is bounded by" topological relationships, relationships between topological entities and supporting geometries, and mathematical descriptions of supporting geometries. By "is bounded by" topological relationships it is meant relationships defining that each of the topological entities is bounded by other topological entities. The providing of a volumetric B-Rep of the CAD 3D model may comprise inputting a volumetric B-Rep by a user or retrieving a volumetric B-Rep from a memory (e.g., RAM or a persistent memory).

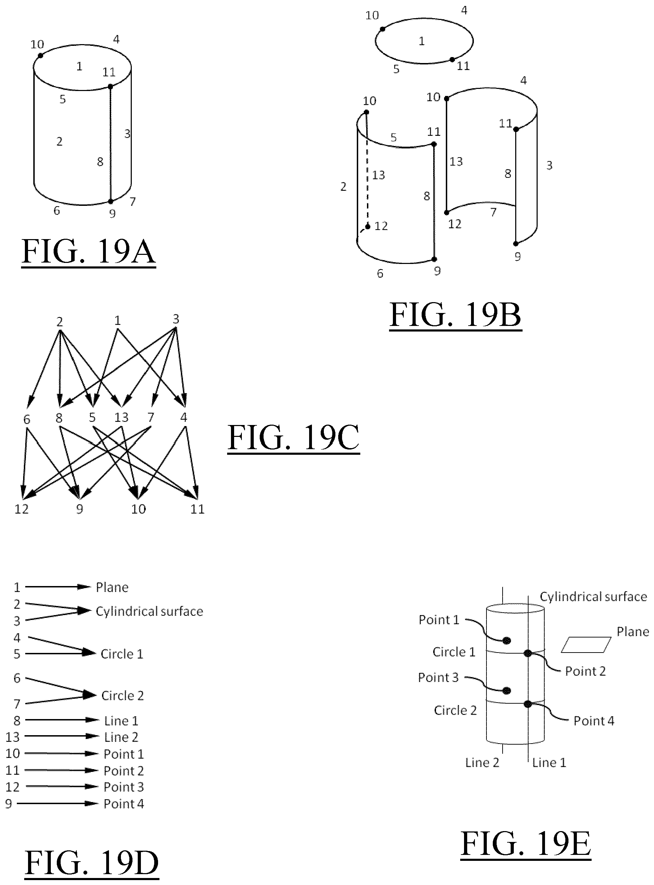

For the sake of explanations, B-Rep models are further discussed in reference to FIG. 19. FIGs. 19A-B illustrate the B-Rep model of a cylindrical slot made of three faces: top planar face and two lateral cylindrical faces. FIG. 19A is the perspective view of the slot in which only the visible faces, edges and vertices are numbered. FIG. 19B presents an exploded view of all faces the slot. Duplicated numbers illustrate edges and vertices sharing. Face 1 is a bounded portion of a plane. In this B-Rep model the boundary of face 1 includes edges 4 and 5, each of them being bounded by vertices 10 and 11. Both of these edges have the same supporting circle. Face 2 is bounded by edges 6, 8, 5 and 13 all lying on an infinite cylindrical surface. Faces 1 and 2 are adjacent because they share edge 5, faces 2 and 3 are adjacent because they share edges 8 and 13, and faces 1 and 3 are adjacent because they share edge 4. FIG. 19C illustrates the "is bounded by" topological relationship of the B-Rep model. Nodes of higher layer are faces, nodes of intermediate layer are edges and nodes of lower layer are vertices. FIGs. 19D-C illustrate the relationship between topological entities (faces, edges, vertices) and the supporting geometries (infinite cylinder, infinite plane, infinite line, points). In the CAD system, the B-Rep model gathers in an appropriate data structure the "is bounded by" relationship, the relationship between topological entities and supporting geometries, and mathematical descriptions of supporting geometries.

The method further comprises detecting (S20) one or more ribbons of the volumetric B-Rep. Each ribbon comprises one or more connected faces of the volumetric B-Rep and being, when unfolded, homeomorphic with a rectangle. Each of the one or more connected faces of the ribbon may be connected by one or more edges to another face of the ribbon. By connected faces it is meant neighboring faces. In other words, each two connected faces of the ribbon may share one or more edges. By a ribbon "being unfolded" it is meant when the ribbon is substantially flattened on a plane. In other words, an angle between any two faces of the one more connected faces of the unfolded ribbon may be substantially 180 degrees. By "substantially" it is meant that the angle between any two faces of the one more connected faces of the unfolded ribbon may be different from 180 degrees up to a small threshold. In examples, the value of the threshold may be smaller or equal to 1 degree or smaller or equal to 0.5 degree. By being "homeomorphic with a rectangle" it is meant that there exists a homeomorphism between an area of the unfolded ribbon, i.e., an area bounded on a respective unfolding plane, and a rectangle as known in the field of topology. The area bounded on a respective unfolding plane may be bounded by a boundary comprising of one or more edges of the one or more connected faces of the ribbon or an unfolding of one or more edges of the one or more connected faces of the ribbon.

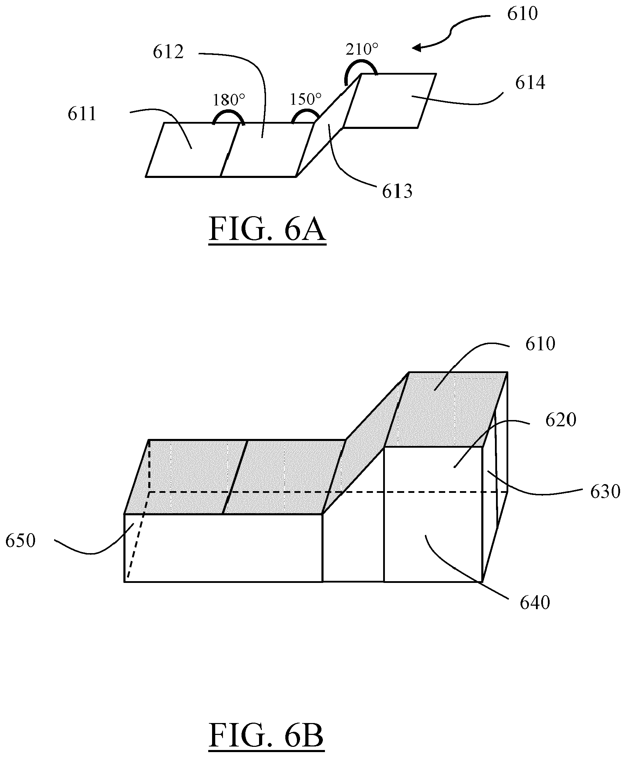

In examples, the detecting one or more ribbons of the volumetric B-Rep may be performed according to the following steps:
(i) detecting one or more smooth surfaces such that each detected smooth surface comprises a group of connected faces of the volumetric B-Rep and each pair of connected faces in the group having a smooth junction. In other words, the detection of the one or more ribbons may comprise grouping faces (e.g., all the faces) of the B-Rep together into one or more groups depending on the smoothness of junction of each face to the connected (i.e., neighboring) faces. A group of the faces shaving smooth junction between any pair of the group may be equivalently called a smooth surface. By "smooth junction" it is meant that an angle defined between the two faces at the junction is in a smooth range. In an example, the smooth range may comprise any angle larger than or equal to 150 degrees and smaller than or equal to 210 degrees: for each of the one or more detected smooth surfaces, an angle between each two connected faces may be larger than or equal to 150 degrees and smaller than or equal to 210 degrees. An example of smooth surface is illustrated in FIG. 6A where the smooth surface 610 is a smooth surface comprising four connected faces 611, 612, 613 and 614. The angle between each two neighboring faces of the smooth surface 610 is between 150 and 210.
(ii) selecting one or more square smooth surfaces among the detected one or more smooth surfaces. Each square smooth surface is, when unfolded, homeomorphic with a rectangle. Said otherwise, each square smooth surface is a smooth surface which upon unfolding represents an area with two or four super edges as the border of the area. By a "super edge" it is meant an open wire where each two edges are connected by a smooth junction (i.e., a smooth contact). A super edge contains n edges (1 <= n) and is made up of an ensemble of edges where the end of each edge is connected to the end of the next edge. A super edge may be closed, for example the closed circle on each extremity of the base of a cylinder (e.g., as depicted in FIG. 19A which consists of two semi-circles) is a super edge. In some examples, two connected edges of the ensemble of edges may be tangent at the connection location, i.e., the two edges are connected with an angle of 180 degrees. A square smooth surface may be a smooth surface which has two or four smooth surfaces as neighbors. An example of a square smooth surface is presented in FIG. 6B. The square smooth surface 610 (grey, top) has 4 neighboring smooth surfaces consisting of: the smooth surface 620 (back) with one face, the smooth surface 630 (right) with two faces, the smooth surface 640 (front) with three faces, and the smooth surface 650 (left) with one face. In examples where none of the detected one or more smooth surfaces is a square smooth surface, the method does not partition the provided volumetric B-Rep which may be a sub-volume of the provided volumetric B-Rep of the CAD 3D model.
(iii) detecting by selecting a set of one or more connected surfaces of the one or more detected square smooth surfaces. Each detected ribbon may have a width of one of the one or more selected connected surfaces. The set of the one or more connected surfaces may be connected along a path, i.e., a ribbon path and the width of the ribbon may correspond to a size of the one of the connected faces of the ribbon perpendicular to the (ribbon) path. In examples, the ribbon may represent a sweep direction (or path) optionally orthogonal to the ribbon path. In such examples, the width of the ribbon may correspond to a size of the ribbon along the sweep direction. The neighboring faces to the ribbon in the sweep direction are called start/target surfaces. The start face may represent a base profile of a sweep along the sweep direction to the target face. Detecting the ribbons thus enables the method to find areas of the CAD 3D model which may serve as a sweep path during meshing operation by the sweep mesh method.

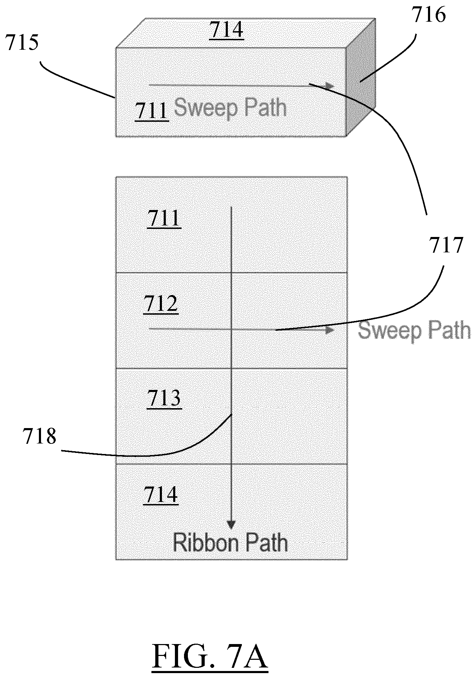

FIGs. 7A-C illustrate examples of detected ribbons. FIG. 7A presents the ribbon 710 comprising four square smooth surfaces, 711, 712, 713 and 714 in the folded form (top) and unfolded form (bottom). The unfolding of the ribbon 710 is performed along the ribbon path 718. The ribbon 710 further represents a sweep from the start face 715 to the target face 716 along the sweep direction 717. The sweep direction 717 is orthogonal to the ribbon path 718.

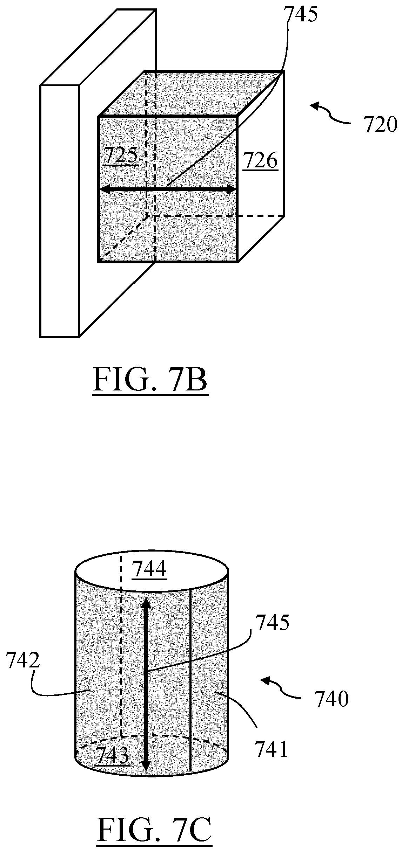

In FIG. 7B, the ribbon 720 comprises four square smooth surface, 721, 722, 723 and 724 (not shown in the figure). The ribbon 720 further represents a sweep by the start/target faces 725 and 726 along the sweep direction 727.

In FIG. 7C, the ribbon 740 comprises a square smooth surface with two faces 741 and 742. The ribbon 740 further represents a sweep by the start/target faces 743 and 744 along the sweep direction 745.

Back to the flowchart of FIG. 1, the method ranks (S30) the one or more detected ribbons based on one or more geometrical criteria that are associated with each of the one or more detected ribbons. By "one or more geometrical criteria" it is meant one or more descriptors, i.e., words characterizing geometry of the detected ribbon.

In examples, the one or more geometrical criteria associated with each of the one or more detected ribbons may be selected among: the detected ribbon is a depression, the detected ribbon is a protrusion, the detected ribbon is closed, and/or the detected ribbon has a revolution. A Ribbon is known as a depression if the connection (i.e., contact) of the ribbon with start and target surfaces are concave on one side and convex on the other side and if the ribbon is detected as "In."

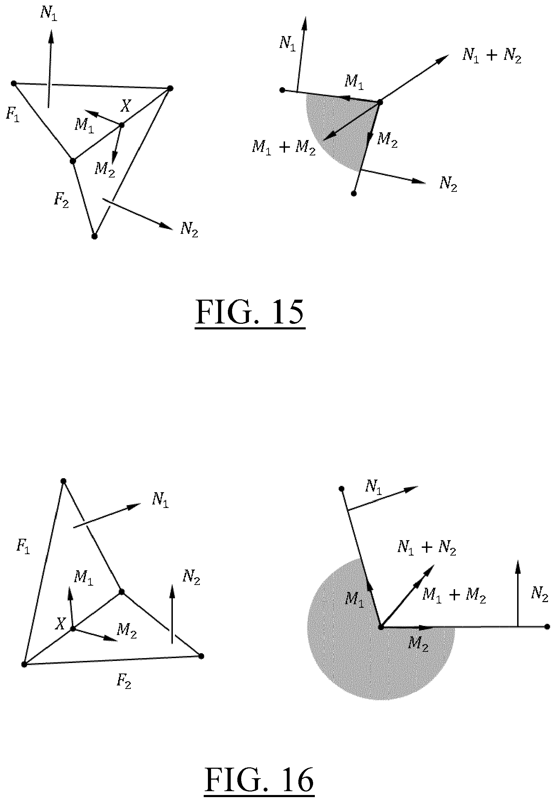

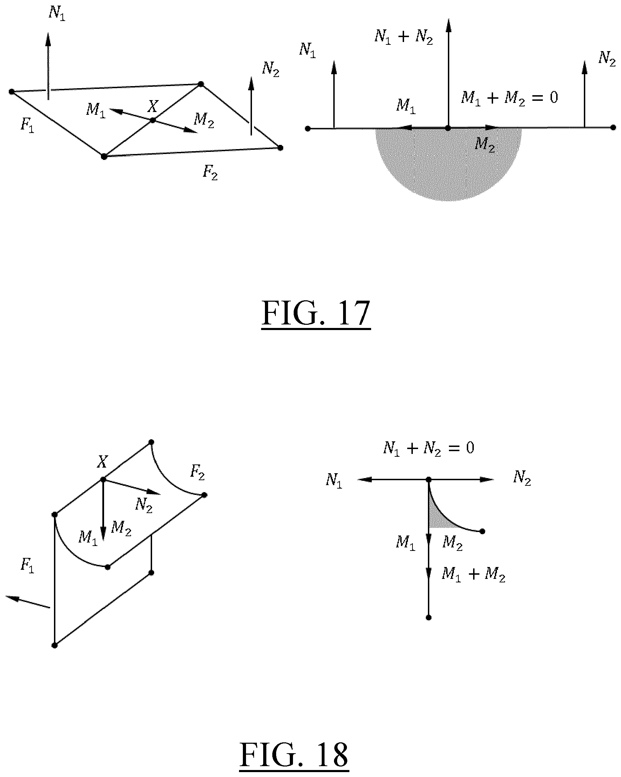

The following discusses the notion of convexity/concavity of a connection. Given the B-Rep of a 3D modeled object, let *E* be an edge shared by faces (i.e., surfaces) *F*₁ and *F*₂, and let *X* be a point on edge *E.* Respective outer normal vectors of faces *F*₁ and *F*₂ are noted *N*₁ and *N*₂. Let *P*₁ and *P*₂ be the planes through point *X* with respective normal vectors *N*₁ and *N*₂. Planes *P*₁ and *P*₂ locally define an outside 3D region and an inside 3D region in the neighborhood of point *X.* By nature, vector *N*₁ + *N*₂ points to the outside 3D region. Let *M*₁ and *M*₂ be the respective material vectors of point X with respect to faces *F*₁ and *F*₂. By nature, vector *M*₁ + *M*₂ points to the convex 3D region. By definition, edge *E* is convex at point *X* if *N*₁ + *N*₂ and *M*₁ *+ M₂* have opposite directions, *i.e.* if 〈*M*₁ + *M*₂, *N*₁ + *N*₂〉 < 0, as illustrated in FIG. 15. Edge *E*, or equivalently a respective connection of surfaces *F*₁ and *F*₂,is convex if it is convex at all points. Conversely, edge *E*, or equivalently a respective connection surfaces *F*₁ and *F*₂,is said to be concave at point *X* if *N*₁ + *N*₂ and *M*₁ + *M*₂ have the same direction, *i.e.* if 〈*M*₁ + *M*₂, *N*₁ + *N*₂〉 > 0, as illustrated in FIG. 16. Edge *E* is concave if it is concave at all points. Otherwise, 〈*M*₁ + *M*₂, *N*₁ + *N*₂〉 = 0 meaning that the edge is either a smooth edge or a knife edge. A smooth edge is such that *M*₁ + *M*₂ = 0 and *N*₁ = *N*₂ as illustrated in FIG. 17. It usually occurs in B-Rep of typical mechanical parts. A knife edge is such that *N*₁ + *N*₂ = 0 and *M*₁ *= M*₂ as illustrated in FIG. 18. Knife edge is described for completeness, it is not usually used for modeling mechanical parts.

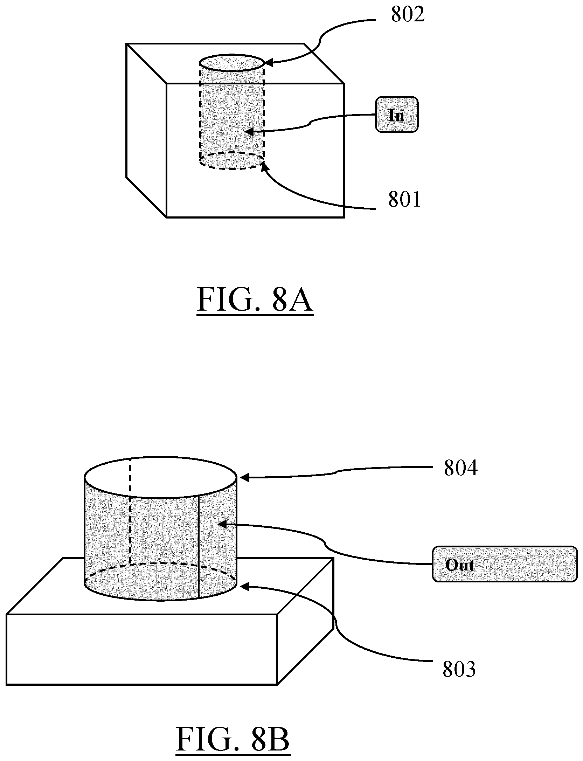

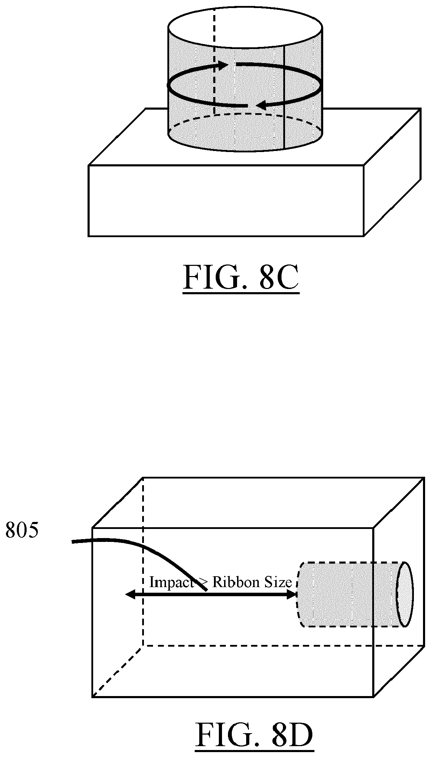

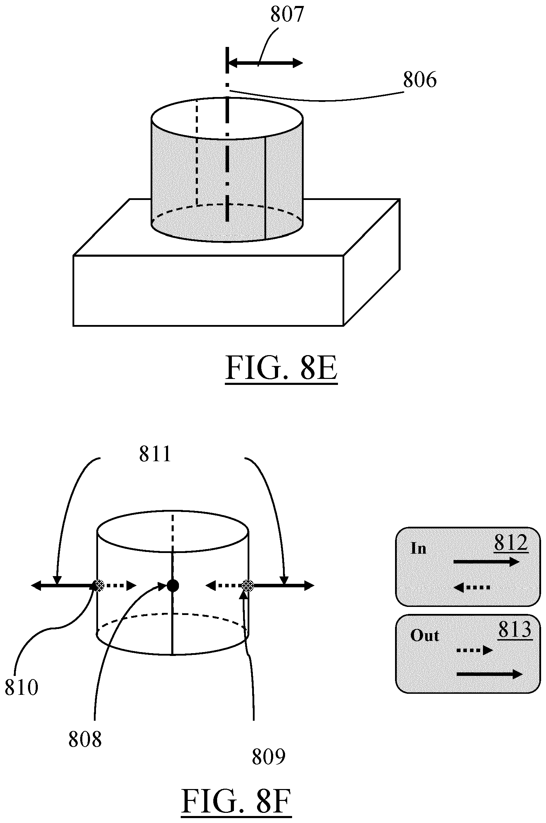

An example of a depression ribbon is presented in FIG. 8A (in grey color) with a concave connection 801 and a convex connection 802. A Ribbon is known as a protrusion if the connection of the ribbon with start and target surfaces are concave on one side and convex on the other side and if the ribbon is detected as "out." An example of a protrusion ribbon is presented in FIG. 8B (in grey color) with a concave connection 803 and a convex connection 804. A Ribbon is known as closed if it does not exist other neighbor than the start/target surfaces. An example of a closed ribbon is presented in FIG. 8C (in grey color). Additionally the method may check if a detected ribbon has a large impact. A Ribbon is known as having a large impact if the distance between the ribbon and the intersection between the B-Rep model and the extrapolation of this ribbon is larger than the ribbon size. By the "ribbon-size" it is meant a length of the largest diagonal of the bounding box of the set of faces of the ribbon in a Cartesian coordinate system. An example of a ribbon having large impact is presented in FIG. 8D (in grey color) with the distance 805. By an "extrapolation of the ribbon" it is meant a prolongation of the ribbon along the sweep direction of the ribbon (i.e., the sweep direction 745 as discussed in reference to FIG. 7). A ribbon is known as a revolution if it is laid on surfaces of revolution having the same axis. An example of a revolution ribbon is presented in FIG. 8E (in grey color) with the axis 806 a radius 807. A ribbon in considered to be In or Out if it is part of a hole or of a bump, respectively. Concretely, if for each face of the ribbon the gravity center of the face is inside the matter (i.e., the volume occupied by material), the ribbon is detected as In, and if for each face of the ribbon the gravity center of the face is outside the matter the ribbon is detected as out. In FIG. 8F, the gravity center of faces (with centers 809 and 810) is 808 and with the direction of the matter 811. The arrows with dot represent the direction from the face centers to the gravity center of the face. For the configuration 812 the ribbon is detected as In, while for the configuration 813 the ribbon is detected as Out. The method may detect a ribbon as In or Out merely for distinguishing between protrusion and depression criteria.

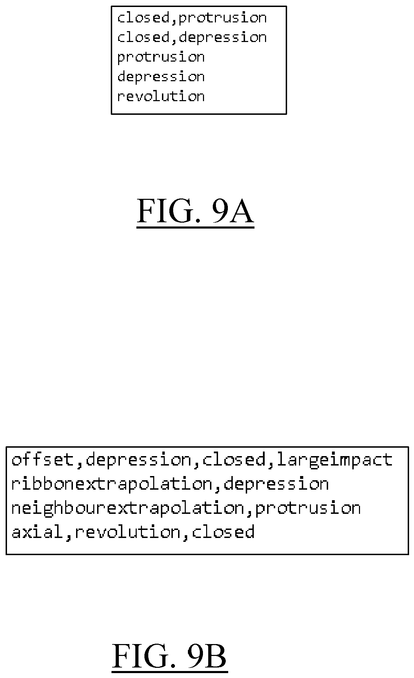

In examples, the ranking the one or more detected ribbons based on one or more geometrical criteria may comprise ranking the detected ribbons in the following ranking order: a) the detected ribbon is closed and is a protrusion, b) the detected ribbon is closed and is depression (i.e., a hole), c) the detected ribbon is a protrusion, d) the detected ribbon is a depression, and e) the detected ribbon is a revolution. In examples, the method may check one or more of the above-mentioned geometrical criteria, for example the method may rank the one or more detected ribbons based on the first satisfied condition from a) to e). In examples, the method may apply the above-mentioned ranking order according to a configuration file, for example saved on a persistent memory. In such examples, the method may analyze each line of the configuration file from the first one to the last one to find a corresponding ribbon among the detected ribbons. An example of such a configuration is presented in FIG. 9A.

Back to the flowchart of FIG. 1, the method selects (S40) successively each of the ranked one or more detected ribbons, the selection being made following the ranking. For each selected ribbons, the method partitions (S50) the volumetric B-Rep of CAD 3D model using a splitting method associated with the geometrical criteria of the selected ribbon, thereby obtaining two or more partitions. The splitting method may use existing topological operators. In examples, the existing topological operators may be one or more standard CAD operators such as extrapolation of a surface (or extrapolating a surface boundary), and/or splitting geometry for example by an intersection between a volume and a surface, disconnect faces of a volume by wires, and/or assemble faces.

In examples, the association between the splitting method and the selected ribbon may be in accordance with a configuration file in which each line of the configuration file stores a splitting method in association to the geometrical criteria of the ribbon. An example of such a configuration file is presented in FIG. 9B. The method then may select a splitting method according to the geometrical criteria of the selected ribbon.

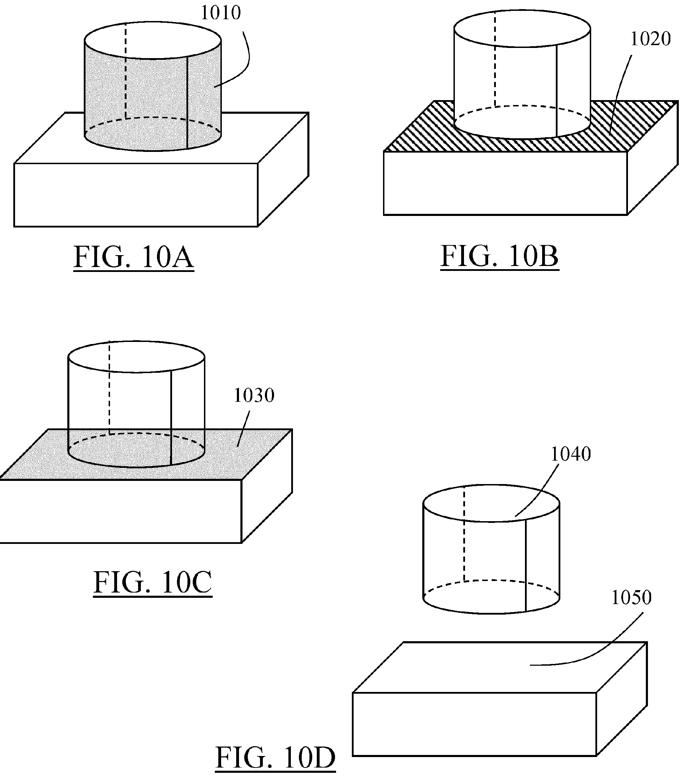

In examples, for each detected ribbon ranked according to a) or c), the partitioning the volumetric B-Rep of CAD 3D model using a splitting method may comprise isolating the protrusion from the rest of the volumetric B-Rep by selecting a concave neighbor of the ribbon, and extrapolating the concave neighbor up through the volumetric B-Rep. The extrapolating of the concave neighbor may remove internal holes, for example when the detected ribbon is a closed protrusion (i.e., ranked according to a). An example of the splitting according to such examples in presented in FIG. 10 A-D. In FIG. 10A, a ribbon 1010 is detected to be a closed protrusion. The method may select the concave neighboring face 1020. The method then may create the splitting surface 1030 by extrapolating the concave neighbor 1020 to remove hole. Then the method may split the volumetric B-Rep in two volumes 1040 and 1050.

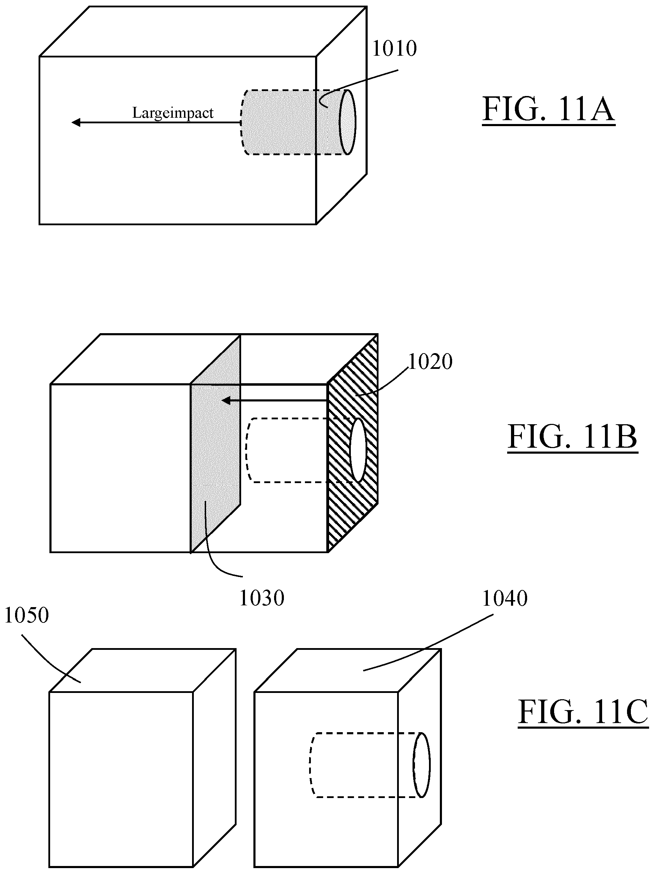

In examples, for each detected ribbon ranked according to b) the partitioning the volumetric B-Rep of CAD 3D model using a splitting method may comprise determining whether the detected ribbon has a large impact and creating a splitting surface which is the offset of the convex neighbor of the ribbon if the detected ribbon has a large impact. As discussed above the detected ribbon having a large impact if the detected ribbon has a size smaller than a distance between the ribbon and an intersection between the volumetric B-Rep and an extrapolation of the detected ribbon. An example of the splitting according to such examples in presented in FIG. 11 A-C. In FIG. 11A, a ribbon 1110 is detected to be a closed, depression and has large impact. The method may select the concave neighboring face 1020 and create the splitting surface 1030 with on offset to remove hole. Then the method may split the volumetric B-Rep in two volumes 1040 and 1050.

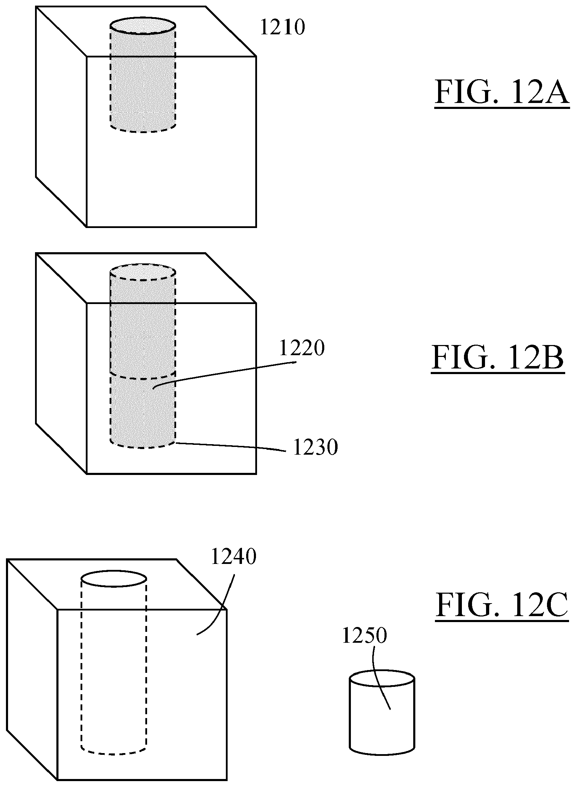

In examples, for each detected ribbon ranked according to d) the partitioning the volumetric B-Rep of CAD 3D model using a splitting method may comprise creating a splitting surface by extrapolating the ribbon up through the volumetric B-Rep. An example of the splitting according to such examples in presented in FIG. 12 A-C. In FIG. 12A, a ribbon 1210 is detected to be a depression. The method may create the splitting surface 1230 by extrapolating 1220 the ribbon 1210 up through the volumetric B-Rep. Then the method may split the volumetric B-Rep in two volumes 1040 and 1050.

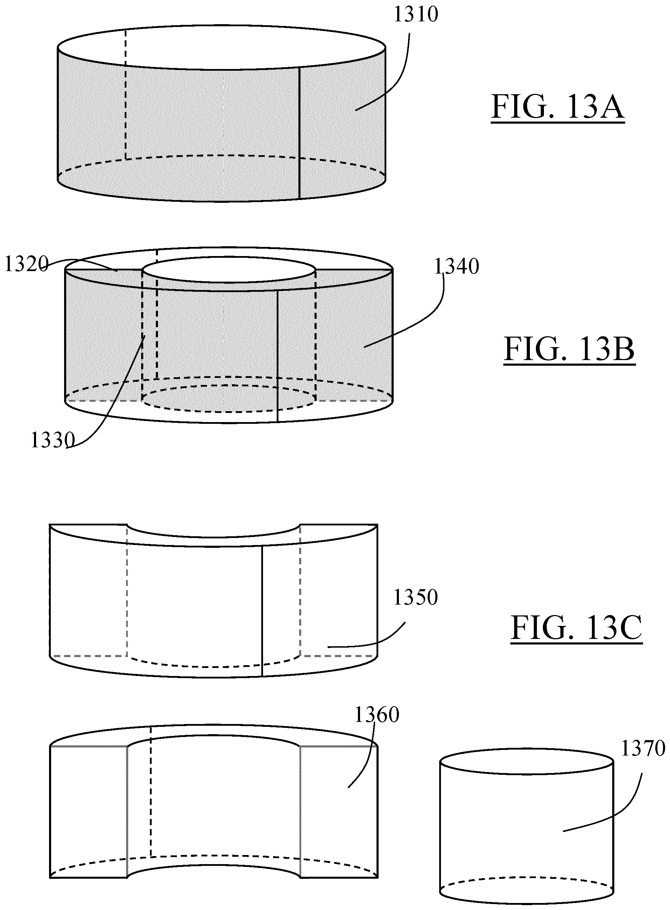

In examples, for each detected ribbon ranked according to e) the partitioning the volumetric B-Rep of CAD 3D model using a splitting method may comprise splitting a volume enclosed by the ribbon into three volumes one of which is a cylinder. An example of the splitting according to such examples in presented in FIG. 13 A-C. In FIG. 13A, a ribbon 1310 is detected to be a depression. The method may create the splitting surface 1340 from ribbon radius 1320 and ribbon axis 1330. Then the method may split the volumetric B-Rep in three volumes 1350, 1360 and a cylinder 1370.

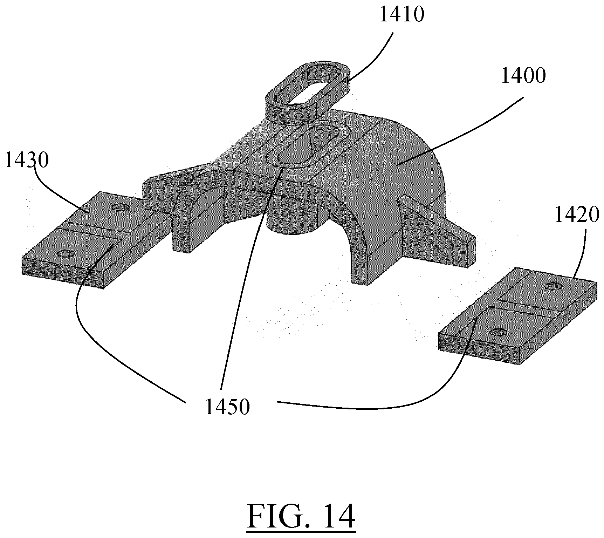

In examples, the partitioning the volumetric B-Rep of CAD 3D model using a splitting method may further comprise, for each obtained partition, computing one or more traces, a trace being a set of one or more edges residing on a face of the obtained partition, each of the one or more edges created as results of partitioning. By "created as results of partitioning" it is meant that the creation of traces is a resulted from splitting a neighboring volume. An example of traces is presented in FIG. 14, in which the volumetric B-Rep is split into four volumes 1400, 1410, 1420, and 1430, the traces 1450 are resulted from such a splitting.

Back to FIG. 1, for each obtained partition, the method determines (S60) whether or not the partition represents a sweepable volume. In examples, the determining whether or not the partition represents a sweepable volume comprises, for each obtained partition determining a start surface and a target surface. As discussed above, each of the start surface and the target surface being neighbor to the ranked ribbon. The determining may further comprise determining a sweep path on the ranked ribbon, determining that there exists a sweep from the start surface to the target surface along the sweep path, thereby determining the partition represents a sweepable volume. The sweep path may be a perpendicular direction to the ribbon path (i.e., the direction of the connection of the one or more faces of the ribbon). In reference to FID. 7A, an example of sweep path 717 is perpendicular to the ribbon path 718.

In examples, the method further comprises, for each selected ribbons and after the obtaining two or more partitions, verifying that an angle between each two edges created as results of the partitioning is larger than or equal a quality angle. The method may perform such a step as a post quality check by verifying that there is no creation of edge with an angle less than the quality angle. The quality angle may be an angle in a range of 0.5 degree and 5.0 degree. The quality angle may be set according to the capability of the meshing software which may be used to tessellate the volumes after partitioning.

In examples, the method may perform in a recursive manner. In such examples, if the method determines that the partition does not represent a sweepable volume the method may call the disclosed method of ribbon detection on the volumetric B-Rep of the partition. The method may stop when the volume of all of the obtained partitions is sweepable.

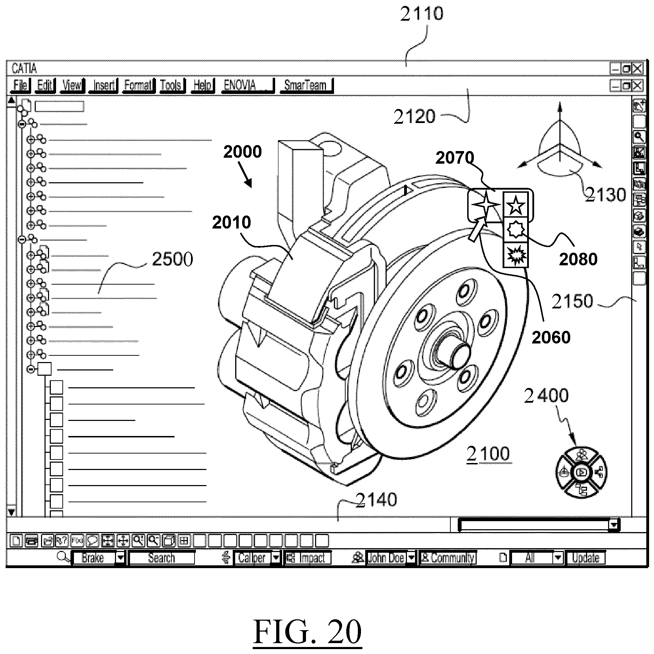

FIG. 20 shows an example of the GUI of the system, wherein the system is a CAD system. The model 2000 is an example of the CAD 3D model provided to the method. The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching or the folding of the 3D modeled object displayed on the screen. The GUI may for example display data 2500 related to the displayed product 2000. In the example of the figure, the data 2500, displayed as a "feature-tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

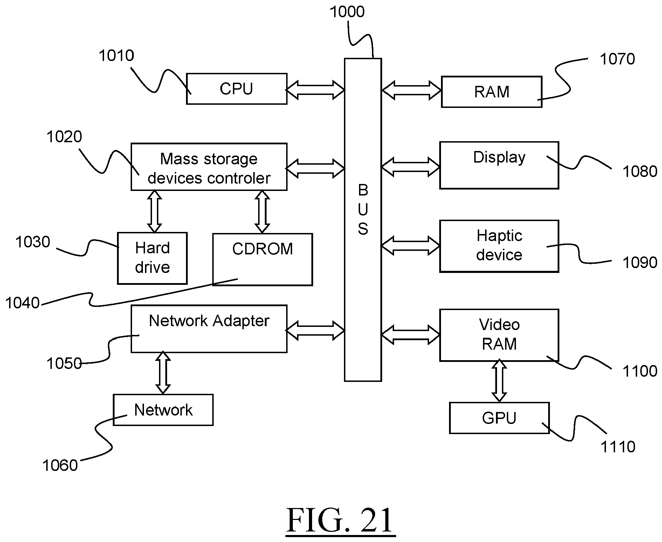

FIG. 21 shows an example of the system, wherein the system is a client computer system, e.g., a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard, or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

Implementations of the method are now discussed.

Such implementations are sought to analyze and split a volume into several sweepable regions. After this split operation performed, a known algorithm of the prior art may be used to create a 3D hexahedral mesh of each of the several sweepable regions.

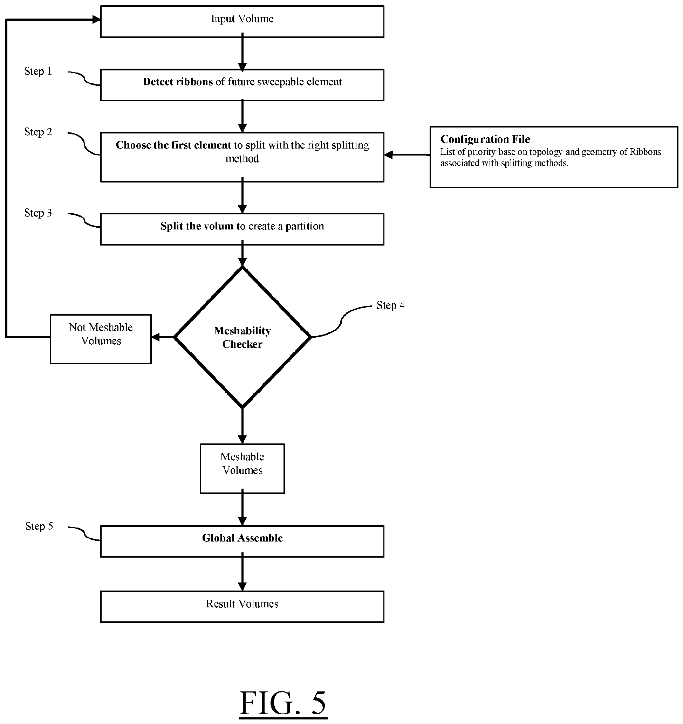

In reference to FIG. 5, the implementation performs the splitting the B-Rep model using an iterative algorithm. In Step 1, the implementations analyze the given B-Rep by detecting ribbons and characterize them. In Step 2, the implementations select one of the detected ribbons and a splitting method. The selection of the ribbon (and the associated splitting method) depends on the criteria of the ribbon found at Step 1. At Step 3, the implementations split the B-Rep model using the splitting method found at Step 2, thereby obtain several sub-volumes. At Step 4, the implementations check each sub-volume to detect if it is meshable by hexahedron using sweep mesh method. The implementations then store all meshable sub-volumes, all sub-volumes which the implementations did not succeed to split, and other volumes given as input of the Step 1. The implementations stop the iterative process if sub-volumes are stored to be assembled. In step 5 the implementations assemble all sub-volumes.

Hexahedral meshing generates hexahedral meshes composed of deformed cubes (i.e., hexahedra). As discussed in the cited document "Hexahedral Meshing: Mind the Gap!," Ray et al., hal-01551603, 2017, hexahedral meshes are often used for simulating some physics like deformation mechanics (e.g., elastic and elasto-plastic), fluid dynamics, or biomechanical simulation because they significantly improve both speed and accuracy of the simulation. This improvement is due to the fact that (1) the hexahedral meshes contain a smaller number of elements compared to tetrahedral meshes (i.e., 5-6 tetrahedra in comparison to a single hexahedron), and (2) the associated tri-linearfunction basis for hexahedral element has cubic terms that can better capture higher order variations, (3) the hexahedral meshes avoid the locking phenomena encountered with tetrahedra, and (4) hexahedral layers of the hexahedral elements may be aligned along geometric boundary features and/or some physical characteristics (flow direction, shock wave, heat gradient, etc.). It is known that hexahedral meshes provide superior performance in bending and torsion in elastic and elasto-plastic analysis and/or provide better results in biomechanical simulations by providing reasonable contact pressures and contact shear stresses regardless of loading conditions, material incompressibility, contact, friction, and footwear condition. Hexahedral meshing may be obtained by standard meshing tool for a sweepable regions, i.e., a region contains a set of faces called source side, a set of faces called target side and between this to sets another set of faces called sweep path. For such a region, the meshing tool may create a 2D square mesh on start set of faces and replicates the same 2D square mesh on target set of faces. Then, the meshing tool may create a 3D hexagonal mesh by sweeping from the start 2D mesh to the target 2D mesh, for example by using the method from Mukherjee et al., "Automatic Hexahedral Sweep Mesh Generation of Open Volumes", Proceedings of the 21st International Meshing Roundtable, 2013.

The implementations further provide an automatic partitioning capability which saves time compared to manual partition for example by an operator. The automatic partitioning further obtains more relevant partitions for complex parts and is more reproductible.

The implementations are based on a B-Rep as a 3D volumic part (i.e., a volumetric B-REP of a 3D CAD model) and are discussed in reference to FIG. 5.

### Step 1: Ribbon detection

First, the implementations group all the faces of the B-Rep together depending on the smoothness of their junctions in order to detect one or more ribbons. Two neighbor faces are in the same group only if all the edges between them get a maximal angle in the given range. The range chosen here is [150, 210] degrees. Such a group is called smooth surface. The implementations, then, detect square smooth surfaces. When a square smooth surface is unfolded, its border is composed of only four super edges. A super edge is an open wire where two edges are connected thanks to a smooth contact. In practice, a square smooth surface is a smooth surface which has two or four smooth surfaces as neighbors.

Finally, the implementations detect the ribbons. The idea behind ribbon detection is to find areas which could become sweep path during meshing operation. Thus, ribbon is also defined by a sweep direction. Concretely, a ribbon is a set of connected square smooth surface. A ribbon is composed of at least one square smooth surface and is only one square smooth surface width. The neighbors of the ribbon in the sweep direction are called start/target surfaces.

### Step 2.1: Compute geometric criteria

First, for each Ribbon, the implementations compute five criteria that are words characterizing a ribbon.
- Depression criterion: A Ribbon is known as a depression if its connections with start/target surfaces are concave on one side and convex on the other side and if it's detected as "In" as defined below.
- Protrusion criterion: A Ribbon is known as a protrusion if its connections with start/target surfaces are concave on one side and convex on the other side and if it's detected as "Out" as defined below.
- Closed criterion: A Ribbon is known as closed if it does not exist other neighbor than the start/target surfaces.
- Large impact criterion: A Ribbon is known as having a large impact if the distance between the ribbon and the intersection between the B-Rep model and the extrapolation of this ribbon is higher than the ribbon size.
- Revolution criterion: A Ribbon is known as a revolution if it is laid on surfaces of revolution having the same axis.
- In/Out: The idea is to detect if the ribbon is part of a hole or of a bump. Concretely, for each face of the ribbon, the implementations check if the gravity center of the face is in or out the matter.

### Step 2.2: Choose the first ribbon to split

To cut (i.e., split) the part, the implementations follow a general logic. The implementations separate first what makes the part too complex to be meshable by favoring the most local cuts. The least complex part is a cylinder. The idea is to cut the small details first. Concretely, the implementations try to cut around the small (in comparison to the size of the part) ribbons first. The idea behind the term "most local" is to be able to cut the detail with an impact as small as possible on the rest of the model. The implementations separate areas with privileged sweep directions, for example circular holes

This logic gives an algorithm which cut the zones in this order around the ribbons having the following properties:
1. Closed, protrusion: The implementations start by removing the closed protrusion bumps. The associated cut will not influence the rest of the part. Indeed the bump comes off without altering the neighboring shapes.
2. Closed, depression: Then the implementations treat the areas with holes. The hole imposes a direction. These areas must be extracted, otherwise they risk becoming more complex by a neighboring cut.
3. Protrusion: Now it is best to remove what is close to a bump. The associated cuts slightly alter the neighboring shapes.
4. Depression: Finally the last local criteria, is to separate not closed depression, because it probably imposes a local sweep direction needed to be extracted.
5. Revolution: In the case of revolution ribbons, the implementations use a specific cutting method as discussed below which creates new volumic elements that can be meshed by sweep. The algorithm may arrive at the fifth criterion because the approach of the algorithm is global volume cutting.

Concretely, the algorithm is driven by a configuration file. The implementations may analyze each line of the configuration file, from the first one to the last one. An example of such a configuration file is illustrated in FIG. 9A. Each line of the configuration file presents a criterion. If the implementations find a ribbon corresponding to the criteria of each line, the found ribbon is the right ribbon for the algorithm. Otherwise, the implementations continue to the next line of the configuration file. The implementations then perform the splitting around the found ribbon as discussed below.

### Step 3: Split the volume

The implementations select a splitting method depending on ribbon criteria and a configuration file. An example of the configuration file is presented in FIG. 8B.

The implementations may use four methods to split a volume:
- Offset method: The idea of the offset method to isolate the hole from the rest of the B-Rep Model. To do that, the implementations create a splitting surface which is the offset of the convex neighbor of the Ribbon. The value of the offset depends on the Ribbon Size. An example of the offset method is illustrated in FIG. 11.
- Ribbon extrapolation method: The idea of the ribbon extrapolation method is to handle hole issues. To do that, the implementations extrapolate the ribbon up through the B-Rep model to create the splitting Surface. An example of the Ribbon extrapolation method is illustrated in FIG. 12.
- Neighbor extrapolation method: The idea of the neighbor extrapolation method is to isolate a protrusion from the rest of the B-Rep model. To do that, the implementations take the concave neighbor of the Ribbon and extrapolate it to remove the internal holes. An example of the neighbor extrapolation method is illustrated in FIG. 10.
- Axial method: The idea of the axial method is to handle solid of revolution. The implementations split this B-Rep model by a special pattern to obtain three volumes which are meshable using sweep directions. An example of the neighbor extrapolation method is illustrated in FIG. 13.

In reference to the example configuration file in FIG. 9B, the implementations of the method use the offset method in case of ribbons characterized by the three criteria: depression, closed and large impact. Further, the implementations may use ribbon extrapolation method in case of ribbons characterized by a criterion of depression. The implementations may use the neighbor extrapolation method in case of ribbons characterized by a criterion of protrusion and the axial method in case of ribbons characterized by the two criteria: revolution and closed.

The implementations perform the splitting by using existing topological operators. The topological operators may be one or more standard CAD operators such as extrapolation of a surface (or extrapolating a surface boundary), and/or splitting geometry for example by an intersection between a volume and a surface, disconnect faces of a volume by wires, and/or assemble faces.

The implementations may perform a quality check after the splitting step by checking that there is no creation of edge with an angle less than the quality angle. The implementation may set the quality angle in a range of 0.5 degree and 5.0 degree according to the mesher capability. In some preferred implementations the quality angle may equal 0.5 degree.

The result of the Step 3 is a multi-volume 3D part.

### Step 4: Meshabilitv Checker

The implementations may declare a volume "meshable" only if it can be meshed using sweep mesh method. In this step, the implementations analyze the result sub-volumes from Step 3 and store all "meshable" ones. All "non-meshable" sub-volumes are partitioned using the algorithm from Step 1.

### Step 5 Assembly

In this step, the implementations assemble all sub-volumes in one part with standard union, which keep the internal faces.

## Claims

1. A computer-implemented method for partitioning a computer-aided design (CAD) 3D model of a mechanical part, the method comprising:
• providing (S10) a volumetric B-Rep of the CAD 3D model;
• detecting (S20) one or more ribbons of the volumetric B-Rep, each ribbon comprising one or more connected faces of the volumetric B-Rep and being, when unfolded, homeomorphic with a rectangle;
• ranking (S30) the one or more detected ribbons based on one or more geometrical criteria that are associated with each of the one or more detected ribbons;
• selecting (S40) successively each of the ranked one or more detected ribbons, the selection being made following the ranking, and for each selected ribbons:
∘ partitioning (S50) the volumetric B-Rep of CAD 3D model using a splitting method associated with the geometrical criteria of the selected ribbon, thereby obtaining two or more partitions; and
∘ for each obtained partition, determining (S60) whether or not the partition represents a sweepable volume.

2. The method of claim 1, wherein the one or more geometrical criteria associated with each of the one or more detected ribbons are selected among:
• the detected ribbon is a depression,
• the detected ribbon is a protrusion,
• the detected ribbon is closed, and/or
• the detected ribbon has a revolution.

3. The method of claim 2, wherein the ranking the one or more detected ribbons based on one more geometrical criteria comprises ranking the detected ribbons in the following ranking order:
a) the detected ribbon is closed and is a protrusion;
b) the detected ribbon is closed and is depression;
c) the detected ribbon is a protrusion;
d) the detected ribbon is a depression; and
e) the detected ribbon is a revolution.

4. The method of claim 3, wherein for each detected ribbon ranked according to a) or c) the partitioning the volumetric B-Rep of CAD 3D model using a splitting method comprises:
• isolating the protrusion from the rest of the volumetric B-Rep by:
∘ selecting a concave neighbor of the ribbon; and
∘ extrapolating the concave neighbor up through the volumetric B-Rep.

5. The method of any of claims 3 to 4, wherein for each detected ribbon ranked according to b) the partitioning the volumetric B-Rep of CAD 3D model using a splitting method comprises:
• determining whether the detected ribbon has a large impact, the detected ribbon having a large impact if the detected ribbon has a size smaller than a distance between the ribbon and an intersection between the volumetric B-Rep and an extrapolation of the detected ribbon; and
• creating a splitting surface which is the offset of the convex neighbor of the ribbon if the detected ribbon has a large impact.

6. The method of any of claims 3 to 5, wherein for each detected ribbon ranked according to d) the partitioning the volumetric B-Rep of CAD 3D model using a splitting method comprises:
• creating a splitting surface by extrapolating the ribbon up through the volumetric B-Rep.

7. The method of any of claims 3 to 6, wherein for each detected ribbon ranked according to e) the partitioning the volumetric B-Rep of CAD 3D model using a splitting method comprises:
• splitting a volume enclosed by the ribbon into three volumes one of which is a cylinder.

8. The method of any of claims 1 to 7, wherein the detecting one or more ribbons of the volumetric B-Rep further comprises:
• detecting one or more smooth surfaces, each detected smooth surface comprising a group of connected faces of the volumetric B-Rep, each pair of connected faces in the group having a smooth junction;
• selecting one or more square smooth surfaces among the detected one or more smooth surfaces, each square smooth surface being, when unfolded, homeomorphic with a rectangle; and
• detecting ribbons by selecting a set of one or more connected surfaces of the one or more detected square smooth surfaces, each detected ribbon having a width of one of the one or more selected connected surfaces.

9. The method of claim 8, wherein, for each of the one or more detected smooth surfaces, an angle between each two connected faces is larger than or equal to 150 degrees and smaller than or equal to 210 degrees.

10. The method of any of claims 1 to 9, wherein the partitioning the volumetric B-Rep of CAD 3D model using a splitting method further comprises, for each obtained partition, computing one or more traces, a trace being a set of one or more edges residing on a face of the obtained partition, each of the one or more edges created as results of partitioning.

11. The method of any of claims 1 to 10, wherein the determining whether or not the partition represents a sweepable volume comprises, for each obtained partition:
• determining a start surface and a target surface, each of the start surface and the target surface being neighbor to the ranked ribbon;
• determining a sweep path on the ranked ribbon;
• determining that there exists a sweep from the start surface to the target surface along the sweep path, thereby determining the partition represents a sweepable volume.

12. The method of any of claims 1 to 11, wherein the method further comprises, for each selected ribbons and after the obtaining two or more partitions, verifying that an angle between each two edges created as results of the partitioning is larger than or equal a quality angle.

13. A computer program comprising instructions for performing the method according to any one of claims 1 to 12.

14. A computer readable storage medium having recorded thereon the computer program of claim 13.

15. A system comprising a processor coupled to a memory and a graphical user interface, the memory having recorded thereon the computer program of claim 13.
